# EUROPEAN PATENT SPECIFICATION

(11) **EP 3 137 012 B1**
(45) Date of publication and mention of the grant of the patent: **13.02.2019**
(21) Application number: 15715135.8
(22) Date of filing: 17.03.2015
(51) Int. Cl.: A61C 8/00

(54) **DENTAL IMPLANT**
ZAHNIMPLANTAT
IMPLANT DENTAIRE

(30) Priority: 25.03.2014 CZ 20140183
(43) Date of publication of application: 08.03.2017
(73) Proprietor: Peceny, Vít, 33701 Rokycany (CZ)
(72) Inventor: Peceny, Vít, 33701 Rokycany (CZ)
(74) Representative: Skoda, Milan
(86) International application number: PCT/CZ2015/000021
(87) International publication number: WO 2015/144097

(56) References cited:
- FR-A1- 2 029 346
- JP-A- 2011 015 959
- KR-A- 20040 037 967
- US-A1- 2010 152 786
- US-A1- 2013 288 201

## Description

### Technical Field

The invention relates to a dental implant, particularly to a dental implant arranged in a jawbone of the oral cavity.

### State of the Art

Currently a whole range of constructed dental implants or implant systems which serve as substitutes for a missing or extracted tooth is known.

For example, from current state-of-the-art, implants are known which have a smooth connecting surface with the jawbone. This sort of implant is known, for example, from the patent EP 2328507. Here, the described dental implant has its head towards the tooth substitute and/or the means of dental treatment technology, and its foot threaded so as to screw into the jawbone. This dental implant is completely or nearly completely made of zirconium dioxide (ZrO₂), and the foot is threaded in the direction from its head portion towards the end opposite the head and is made to be conical and tapered. The thread has a completely or sectionally threaded edge which is made as a saw-toothed thread with the first cantilever surface not extending radially, specifically linearly or convexly diagonally to the radial direction, and a second radially extending cantilever surface for each saw-tooth, where the first cantilever surface does not extend radially and is always oriented or directed in the screwing direction of each thread and the second cantilever surface is oriented or directed against the screwing direction of each thread.

The disadvantage of this implant is that preliminary preparation requires a relatively exact and considerably large hole in the jawbone. A further disadvantage is that its primary fixation in the jawbone is not entirely stable.

Implant designs are also known which have a contact surface with the jawbone bearing various projections.

For example, a dental implant of bioactive titanium is known from the utility model CZ 11766 U. This dental implant contains a prism with parallel or bevelled opposite sides adjacent to the body tissue with the opposite sides of the prism fitted with at least two projections and with a threaded hole in the side wall of the prism.

A dental implant for insertion into a supporting structure, specifically into the jawbone is also known from EP 1982673 to fasten the active component, in particular dental crowns with implants containing an insert. The implant is fitted with an interior recess, into which an insert can be set and this insert fitted into the interior recess and so pressing it into the supporting structure's retainers which are set into the walls of the implant, and wherein the interior recess is formed to be tapered. The insert is designed as conical and passes through an axial bore into which a lengthwise screw can be inserted for attaching the active component element, or insert.

The disadvantage of both the above mentioned technical solutions is again that preliminary preparation requires a relatively exact and considerably large hole in the jawbone.

Currently, the most widely used implant systems are those which work using a screw-shaped dental implant.

For example, from patent EP 1706057 a dental implant is known which is to be screwed with its parabolic main body featuring a self-tapping thread arrangement or even a multipoint arrangement fitted with at least two cutting notches, with a parabolic base thread and the upper portion positioned crowning the thread construction, with an opening shaped to accommodate screwing aids, and with a thread to make fast the fixing of dental crowns, bridges and such, as well as convex intraosseous parts, and optionally with a tapering section or a cap, wherein the sides of the thread are fitted with side threading at an angle of 20°.

From a further patent, EP 1924212, a two-piece dental implant is known which has a distal implant part and a proximal implant part which, when coupled together at the join of the connection and at the place of the connection features fastening areas facing the surface, with a sealing element provided between the facing surfaces of the distal portion of the implant and the proximal portion of the implant, which faces the surfaces that in the final coupled state of the two implant parts, lie tightly with their surfaces facing each other. Between the distal part of the implant and the proximal part of the implant, the implant is equipped with mutually facing stopping surfaces, which touch when completely assembled and which limit the degree of approximation of the two surfaces of the implant parts facing each other, between which a sealing element is fitted, so that the stopping surfaces define the minimum distance of both facing surfaces of the implant components, thus bridging the sealing element, when the sealing element at least partly consists of some elastic material. The exterior surface of the sealing element forms the exterior surface of the dental implant.

A Dental implant comprising a contact surface with the jawbone in the form of a screw is also known from EP 1460960.

Even with the above mentioned dental implants which use a threaded screw to anchor the implement to the jawbone, the disadvantage is that preliminary preparation requires a relatively exact and considerably large hole in the jawbone.

US 2010/152786 A1 discloses a dental implant according to the preamble of claim 1.

US 2013/288201 A1 discloses a dental implant having two roots. Each root has a tip having a partially spherical shape.

All known and above noted dental implants or implant systems have a number of disadvantages, among which include, for example, that all require relatively complicated-and unpleasant for the patient- preparation of a hole to receive the implant which is then pushed, pulled through, or screwed into the jawbone. The preliminary preparation consists of drilling a pilot hole with the removal of a relatively large volume of bone. Another disadvantage of the current state-of-the-art is that new bone formation occurs only at the surface of the implant.

The aim of the invention is the design of a dental implant, which will require minimal preliminary preparation of the opening for its insertion, which will save the patient much pain and suffering, and which will ensure a precise and stable anchoring of prosthetic teeth in the jawbone.

### Principle of the Invention

The mentioned deficiencies are largely eliminated and the objectives of the invention fulfilled by a dental implant according to appended claim 1. Further embodiments are defined in the appended dependent claims. The projection rests in wall of the hole resulting from a tooth extraction or from pre-drilling of the jawbone, where the aperture is simply cleaned and only minimally adapted to receive the dental implant. The particular advantage is that this minimises the labor associated with the preparation of the space for its positioning, which also results in reduced costs and in particular, great relief to the patient. The advantage is that the more projections, the better stabilised the dental implant is in a specified location.

Preferably, its body also includes a base portion for receiving a dental extension. The anchoring means improves the fixation properties and reduces the risk of tissue injury.

The projection may be attached to any part of its body. For practical and production reasons it is advantageous if the projection is attached to the bottom part of the body base. This arrangement provides the possibility for easy application into the aperture in the jawbone.

From the perspective of optimising anchoring functions, it is to advantage if the projection has shape memory, and to further advantage is designed as a flexible.

From the viewpoint of problem-free acceptance of the dental implant by the patient's body, it is also to advantage when the implant is made of a biocompatible material which is preferably titanium and / or an alloy thereof.

It is also very advantageous if the body of the dental implant comprises an aperture. Arranging an aperture in the dental implant enables the dentist intervention in case of any problems that may arise in the hole made in the jawbone, makes possible the application of augmentation material into the hole in the jawbone, and makes it possible for new bone formations to grow into the bottom of the base of the body of the implant.

To advantage, the part for receiving the dental extension has a bracket arranged at its base, which enables the exchange of a dental extension to the implant during application, and its replacement in future.

The advantage of the dental implant according to the invention is that it minimises the requirements for shape modification of the hole in the jawbone to receive it. The dental implant according to the invention easily adapts to the surrounding terrain. This closely relates to great savings of time and limited patient suffering associated with the large apertures for receiving dental implants according to known state-of-the-art. The dental implant, according to the invention, is furthermore very well adapted to internal stress in the body of the jaw during chewing so that no undesirable micro-fractures occur. The biggest advantage is that the dental implant allows for new bone formation throughout the lesion between the projections of the implant even in the hollow bottom of the upper part. The projections also increase surface area for osseointegration of the implant. In view of that mentioned above, the application of a dental implant according to the invention also significantly reduces demands on the amount of instrumentation.

### Overview of the Figures

The invention will be further elucidated using drawings, in which Fig. 1 shows a view of a dental implant with a complete body, Fig. 2 shows a detailed view of a dental implant with a body which is arranged with an aperture, and Fig. 3 shows a detailed view of a dental implant using a bracket.

### Examples of the Performance of the Invention

### Example 1

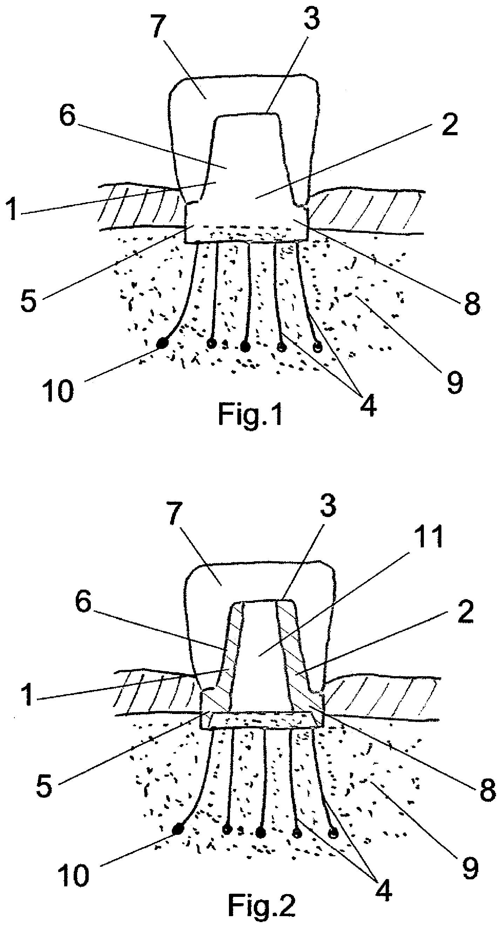

The dental implant 1 (Fig. 1) is mounted in the jawbone 9 of the oral cavity, and comprises a body 2 with a profiled surface 3 for receiving a dental extension 7.

The body 2 comprises a base 5 and a part 6 for receiving a dental extension 7.

To the lower part 8 of the base 5 of the body 2 a number of projections 4 are attached. Alternatively, the projections 4 may be an integral part of the body 2.

The projections 4 have, arranged at their ends, anchoring means 10 which have a spherical shape.

The projections 4 are made to be resilient, while having shape memory.

The projections 4 and the body 2 are made of a biocompatible material, which is titanium and/or a titanium alloy.

### Example 2

The dental implant 1 (Fig. 2) is mounted in the jawbone 9 of the oral cavity, and comprises a body 2 with a profiled surface 3 for receiving a dental extension 7.

The body 2 comprises a base 5 and a part 6 for receiving a dental extension 7 through which passes an approximately central aperture 11.

To the lower part 8 of the base 5 of the body 2 a number of projections 4 are attached. Alternatively, the projections 4 may be an integral part of the body 2.

The projections 4 have, arranged at their ends, anchoring means 10 which have a spherical shape.

The projections 4 are made to be resilient, while having shape memory.

The projections 4 and the body 2 are made of a biocompatible material, which is titanium and /or a titanium alloy.

### Example 3

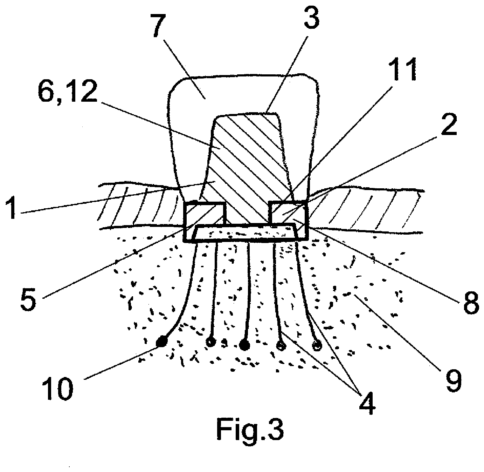

The dental implant 1 (Fig. 3) is mounted in the jawbone 9 of the oral cavity, and comprises a body 2 with a profiled surface 3 for receiving a dental extension 7.

The body 2 comprises a base 5 and a part 6 for receiving a dental extension 7 on whose profiled surface 3 is a bracket 12 mounted in an aperture 11 arranged in the base 5.

To the lower part 8 of the base 5 of the body 2 a number of projections 4 are attached. Alternatively, the projections 4 may be an integral part of the body 2.

The projections 4 have, arranged at their ends, anchoring means 10 which have a spherical shape.

The projections 4 are made to be resilient, while having shape memory.

The protrusions 4 and the body 2 are made of a biocompatible material, which is titanium and/or a titanium alloy.

### Industrial Application

A dental implant, according to the invention, which can in particular be used as a means for fastening a dental prosthesis.

### List of Reference Marks

- 1: dental implant
- 2: body
- 3: profiled surface
- 4: projection
- 5: base
- 6: part for receiving a dental extension
- 7: dental extension
- 8: bottom
- 9: jawbone
- 10: anchoring means
- 11: aperture
- 12: bracket

## Claims

1. A dental implant comprising a body (2) with a profiled surface (3) for receiving a dental extension (7) arranged in the jaw bone (9) of the oral cavity, wherein the dental implant comprises at least two projections (4) attached to its body (2), where the projections (4) are made to be resilient, while having shape memory, **characterised by that** each projection (4) has arranged at its end an anchoring means (10), wherein each the anchoring means (10) has a spherical shape.

2. The dental implant according to claim 1, **characterised by that** the body (2) comprises a base (5) and a part (6) for receiving a dental extension (7).

3. The dental implant according to any of the preceding claims, **characterised by that** the projection (4) is attached to the bottom (8) of the base (5) of the body (2).

4. The dental implant according to any of the preceding claims, **characterised by that** it is made of a biocompatible material.

5. The dental implant according to claim 4, **characterised by that** the biocompatible material is titanium and / or an alloy thereof.

6. The dental implant according to any of the preceding claims, **characterised by that** the body (2) comprises an aperture (11).

7. The dental implant according to any of the preceding claims 2 until 9 6, **characterised by that** the part (6) for receiving a dental extension (7) is a bracket (12) arranged in the base (5).

## Patentansprüche

1. Das Dentalimplantat beinhaltet den Körper (2) mit einer geformten Oberfläche (3) für die Aufnahme einer Zahnprothese (7), die im Kinnbackenknochen (9) der Mundhöhle angeordnet wird, wobei das Dentalimplantat mindestens zwei Fortsätze (4), die fest an den Körper (2) befestigt sind, enthält, wobei die Fortsätze (4) elastische Ausführung haben, und ein Gestaltbeharrungsvermögen besitzen, und dieses, **ist dadurch gekennzeichnet, dass** jeder Fortsatz (4) an dessen Ende ein Rückhalteelement (10) angeordnet ist, wobei jedes Rückhalteelement (10) eine Kugelform hat.

2. Das Dentalimplantat nach Ansprüche 1, **ist dadurch gekennzeichnet, dass** der Körper (2) einen Grund (5) sowie einen Teil (6) für die Aufnahme der Zahnprothese (7) enthält.

3. Das Dentalimplantat nach einer der vorherigen Ansprüche, **ist dadurch gekennzeichnet, dass** der Fortsatz (4) an den Unterteil (8) des Grundes (5) vom Körper (2) befestigt ist.

4. Das Dentalimplantat nach einer der vorherigen Ansprüche, **ist dadurch gekennzeichnet, dass** es aus einem biokompatiblen Material hergestellt wird.

5. Das Dentalimplantat nach der Ansprüche 4, **ist dadurch gekennzeichnet, dass** als biokompatibles Material Titan und/oder dessen Legierung dient.

6. Das Dentalimplantat nach einer der vorherigen Ansprüche, **ist dadurch gekennzeichnet, dass** der Körper (2) eine Öffnung (11) beinhaltet.

7. Das Dentalimplantat nach einer der vorherigen Ansprüche 2 bis 6, **ist dadurch gekennzeichnet, dass** als Teil (6) für die Aufnahme der Zahnprothese (7) das Abutment (12), welches im Grund (5) eingebaut ist, dient.

## Revendications

1. L'implant dentaire comprenant le corps (2) avec un surface profilé (3) pour recevoir l'extension dentaire (7) disposé dans l'os maxillaire (9) de la cavité buccale où l'implant dentaire comprend au moins deux saillis (4) fixés au corps (2) où les saillis (4) sont réalisés en tant que flexibles, et en même temps ils ont une mémoire de forme, **cactérisé en ce que**, chaque saillis (4) a, à son extrémité, un dispositif de fixation (10), et ce dispositif de fixation (10) a une forme sphérique.

2. L'implant dentaire selon la revendication 1, **cactérisé en ce que**, le corps (2) contient la base (5) et la partie (6) pour la réception de l'extension dentaire (7).

3. L'implant dentaire selon une des revendications précédentes, **cactérisé en ce que**, le sailli (4) est fixé à la partie inférieure (8) de la base (5) du corps (2).

4. L'implant dentaire selon une des revendications précédentes, **cactérisé en ce que**, qu'il est fabriqué du matériau biocompatible.

5. L'implant dentaire selon la revendication 4, **cactérisé en ce que**, le matériau biocompatible est le titane et/ou son alliage.

6. L'implant dentaire selon une des revendications précédentes, **cactérisé en ce que**, le corps (2) comporte un vide (11).

7. L'implant dentaire selon une des revendications 2 jusqu'à 6, **cactérisé en ce que**, la partie (6) pour la réception de l'extension dentaire (7) est un pilier (12) di sposé dans la base (5).
